**Europäisches Patentamt**

**European Patent Office**

**Office européen des brevets**

(19)

(11) Veröffentlichungsnummer: **0 124 631**
**B1**

(12) # EUROPÄISCHE PATENTSCHRIFT

(45) Veröffentlichungstag der Patentschrift:
15.10.86

(51) Int. Cl.⁴: **G 02 B 27/30**, F 41 G 1/00

(21) Anmeldenummer: **83104503.4**

(22) Anmeldetag: **07.05.83**

(54) Vorrichtung zur Erzeugung eines optischen Zielstrahles.

(43) Veröffentlichungstag der Anmeldung:
**14.11.84 Patentblatt 84/46**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**EP-A-0 069 575**
**DE-B-2 462 506**
**GB-A-2 056 634**
**US-A-3 362 074**
**US-A-3 552 819**

(73) Patentinhaber: **Firma Carl Zeiss, D-7920 Heidenheim (Brenz) (DE)**

(72) Erfinder: **Stana, Hans, Ing. grad.,
Weingartenstrasse 59, D-7082 Oberkochen (DE)**
Erfinder: **Renner, Werner, Ing. grad.,
Rembrandtweg 36, D-7920 Heidenheim (Brenz) (DE)**

EP 0 124 631 B1

## Beschreibung

Die vorliegende Erfindung betrifft eine Vorrichtung zur Erzeugung eines optischen Zielstrahles, der mit einer, diese Vorrichtung tragenden Unterlage auch bei extremer mechanischer und thermischer Beanspruchung einen definierten Winkel bildet.

Solche Vorrichtungen finden beispielsweise Verwendung zur Prüfung langer Führungen bei Werkzeugmaschinen und zur Ermittlung von Winkelabweichungen zwischen den Achsen von Teilen großer Maschinen. Die Vorrichtung dient hier als Justierkollimator, dessen Zielstrahl über ein entsprechend ausgebildetes Fernrohr beobachtet wird. Ist die vom Justierkollimator nach Unendlich abgebildete Zielmarke so gestaltet, daß sie eine Zielmarke im Fernrohr zu einer symmetrischen Figur ergänzt, so lassen sich Abweichungen, die beim rauhen Betrieb auftreten, leicht erkennen und bei entsprechender Kalibrierung auch messen. Hier können je nach Maschinentyp extreme mechanische und auch thermische Beanspruchungen des Justierkollimators auftreten.

Man hat bisher Justierkollimatoren verwendet, die aus mehreren optischen Elementen bestehen. Solche Vorrichtungen bringen im Betrieb große Schwierigkeiten mit sich, da der richtige gegenseitige Justierzustand der Elemente bei hohen Beanspruchungen verloren geht. Eine Sicherung dieses Justierzustandes ist praktisch nicht möglich, ohne daß bei hohen mechanischen Beanspruchungen eine Beschädigung der optischen Elemente auftritt.

Es ist deshalb die Aufgabe der vorliegenden Erfindung, eine Vorrichtung zur Erzeugung eines optischen Zielstrahles zu schaffen, die bei einfachem Aufbau auch bei extrem hoher mechanischer und thermischer Beanspruchung störungsfrei arbeitet.

Diese Aufgabe wird erfindungsgemäß durch eine Vorrichtung mit den in Anspruch 1 angeführten kennzeichnenden Merkmalen gelöst.

Die Vorrichtung nach der Erfindung vermeidet alle im Zusammenhang mit der gegenseitigen Justierung mehrerer optischer Elemente auftretenden Schwierigkeiten und sichert die Position des Objektivs im Gehäuse zuverlässig, ohne daß eine direkte Berührung zwischen dem Objektiv und dem Metallgehäuse auftritt. Eine solche würde bei extremen mechanischen Beanspruchungen zu einer Zerstörung des Objektivs führen. Durch die Verwendung eines Materials mit extrem niedrigem Ausdehnungskoeffizienten für das Obektiv ist sichergestellt, daß die Vorrichtung auch extremen thermischen Beanspruchungen, insbesondere thermischen Wechselbeanspruchungen standhält.

Weitere zweckmäßige Ausgestaltungen des Objektivs und seiner Beleuchtungseinrichtung ergeben sich aus den Unteransprüchen 2 bis 6.

Es kommt bei der neuen Vorrichtung wesentlich darauf an, eine feste Verbindung mit der Unterlage zu gewährleisten, die sich bei den auftretenden mechanischen Beanspruchungen nicht lockert. Eine zweckmäßige Ausgestaltung der in Anspruch 1 genannten form- und kraftschlüssigen Verbindung ergibt sich aus den Unteransprüchen 7 bis 9.

Die nach der Erfindung aufgebaute Vorrichtung ist in der Lage, auch bei ganz extremen mechanischen und thermischen Beanspruchungen einwandfrei zu arbeiten. Solche Beanspruchungen treten auf, wenn die Vorrichtung angewandt wird, um die Raumlage der Mündung eines Geschützrohres zu überwachen. Dabei wird die Vorrichtung in der Nähe der Mündung des Geschützrohres angebracht und der von der Vorrichtung ausgestrahlte Zielstrahl gelangt zu einem Zielgerät. Die Ziellinie dieses Gerätes erhält beim Justieren einen genau vorbestimmten Winkel zur Achse des kalten Geschützrohres. Zu diesem Zweck wird in das Geschützrohr eine Justiereinrichtung eingeführt, wie sie beispielsweise in der DE-A 1 257 039 beschrieben ist. Nach erfolgter Justierung erreicht der entgegen der Geschoßrichtung verlaufende Zielstrahl der neuen Vorrichtung, die hier wieder als Justier-Kollimator verwendet wird, eine bestimmte Lage im Zielgerät.

Das Geschützrohr wird durch das Abfeuern der Geschoße heiß und kann sich dabei verbiegen, so daß die Achse des Mündungsbereiches, welche die Flugrichtung des Geschoßes bestimmt, in ihrer Raumlage verändert wird. Dies äußert sich in einer Abweichung des Kollimators-Zielstrahles von seiner Sollposition, so daß das Zielgerät entsprechend nachjustiert werden kann. Danach nimmt sein Zielstrahl wieder die richtige Positio, bezüglich der Achse der Rohrmundung ein.

Es ist ohne weiteres verständlich, daß bei diesem Anwendungsbeispiel die mechanische und die thermische Beanspruchung des Kollimators besonders groß ist. So treten im Mündungsbereich Kräfte auf, die 40 000 g noch überschreiten können.

Die Erfindung wird im folgenden anhand der Fig. 1-7 der beigefügten Zeichnungen näher erläutert. Im einzelnen zeigen:

Fig. 1 einen Schnitt durch ein Ausführungsbeispiel, bei dem die Verbindung des Gehäuses mit der Unterlage nicht dargestellt ist;

Fig. 2 ein anderes Ausführungsbeispiels eines Objektivs;

Fig. 3 eine Seitenansicht der Vorrichtung nach der Erfindung in ihrer Verbindung mit einer Unterlage;

Fig. 4 die Draufsicht auf die Vorrichtung nach Fig. 3;

Fig. 5 ein Ausführungsbeispiel einer Schraubensicherung bei der in Fig. 3 dargestellten Verbindung mit der Unterlage;

Fig. 6 die Vorrichtung nach der Erfindung.in ihrer Anwendung zur Uberwachung einer langen Führungsbahn;

Fig. 7 ein Ausführungsbeispiel für die im Fernrohr der Fig. 6 beobachteten Zielmarken.

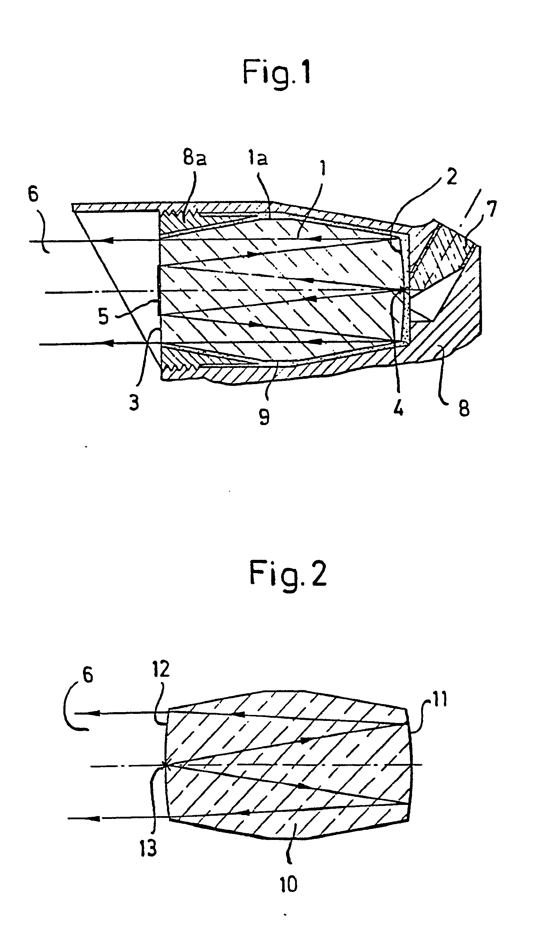

In Fig. 1 ist mit 1 ein einlinsiges Objektiv bezeichnet, das aus transparentem Material mit einem linearen Ausdehnungskoeffizienten $<10^{-6}$ K-1 besteht. Als Material kann beispielsweise das unter der Handelsmarke "Herasil" erhältliche Quarzglas Verwendung finden.

Das in Fig. 1 dargestellte Objektiv 1 ist plan-konvex ausgebildet. Es trägt auf seiner konvexen optisch wirksamen Fläche 2 eine Zielmarke 4; die zweite optische Fläche 3 ist in ihrem Zentralbereich 5 verspiegelt. Wie die Darstellung der Fig. 1 zeigt werden die von der Zielmarke 4 ausgehenden Strahlen im Objektiv 1 in einen parallelen Zielstrahl 6 umgewandelt, welcher die Zielmarke 4 nach Unendlich abbildet.

Zur Beleuchtung der Zielmarke 4 dient im dargestellten Ausführungsbeispiel ein Prisma 7, welches das Umgebungslicht der Zielmarke 4 zuführt. Es ist ohne weiteres verständlich, daß zur Beleuchtung der Zielmarke 4 nicht nur das Tageslicht verwendet werden kann, sondern daß es auch möglich ist, eine gesonderte Beleuchtungseinheit vorzusehen.

Das Objektiv 1 und das Prisma 7 sind formschlüssig in einem Gehäuse 8 gelagert, das beispielsweise aus einer Aluminiumlegierung besteht. Um einen direkten Kontakt zwischen den optischen Elementen 1 und 7 und dem Metallgehäuse 8 zu vermeiden, ist die äußere Umfangsfläche 1a des Objektivs 1 ebenso wie die Umfangsfläche des Prismas 7 von einer Schicht 9 aus dauerelastischem Material umgeben. Diese Schicht hat eine Dicke < als 0,3 mm und besteht beispielsweise aus einem Silikonkleber.

Die äußere Umfangsfläche 1a des Objektivs 1 ist bi-konisch ausgebildet, was die formschlüssige Lagerung im Gehäuse 8 wesentlich erleichtert. Ein Ring 8a mit konusförmiger Gestalt wird im Gehäuse 8 eingeschraubt und dient zur Sicherung der Lage des Objektivs 1 im Gehäuse 8.

Das einlinsige Objektiv 1 kann vielfältige Gestalt haben; es ist möglich, sphärische und asphärische wirksame Flächen vorzusehen. Im Ausführungsbeispiel der Fig. 2 ist ein einlinsiges Objektiv 10 dargestellt, das bi-konvex ausgebildet ist. Auf seiner Lichtaustrittsfläche 12 trägt dieses Objektiv eine Zielmarke 13. Die gegenüberliegende Fläche 11 ist voll verspiegelt. Die Flächen 11 und 12 wirken so zusammen, daß die Zielmarke 13 durch den Parallel-Zielstrahl 6 nach Unendlich abgebildet wird.

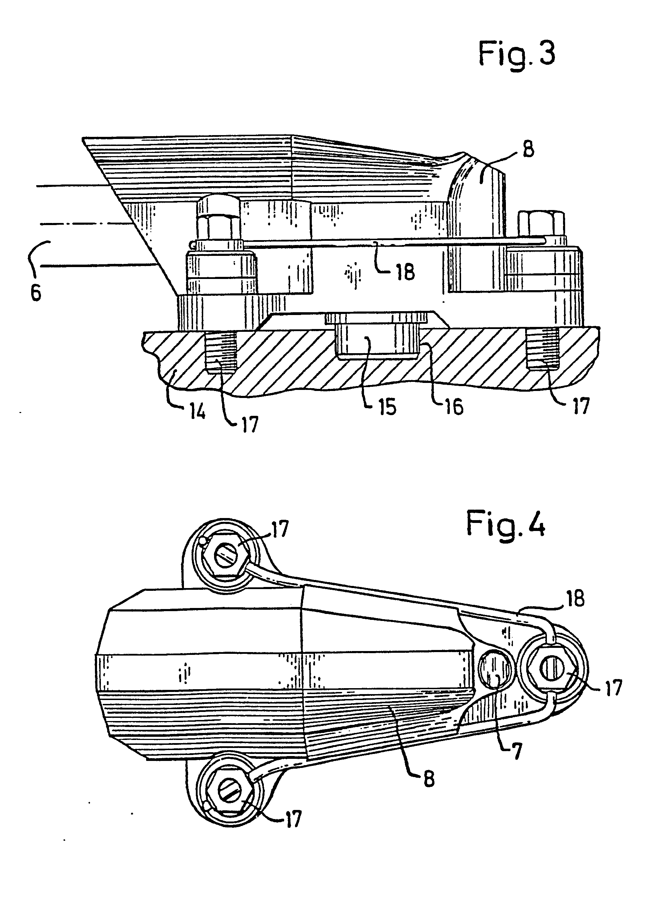

In Fig. 3 ist die Befestigung des Gehäuses 8 auf einer Unterlage 14 dargestellt. Man erkennt, daß das Gehäuse 8 fest mit einem zylindrischen Zapfen 15 verbunden ist, welcher in eine Ausnehmung 16 der Unterlage 14 eingesetzt wird und damit eine formschlüssige Verbindung herstellt. Zur kraftschlüssigen Verbindung des Gehäuses 8 mit der Unterlage 14 dienen drei Schrauben 17. Diese Schrauben 17 werden mit einem definierten Drehmoment angezogen und dann mittels einer mechanischen Schraubensicherung 18 so gesichert, daß sie sich weder durch Vibrationen noch durch Schock lösen.

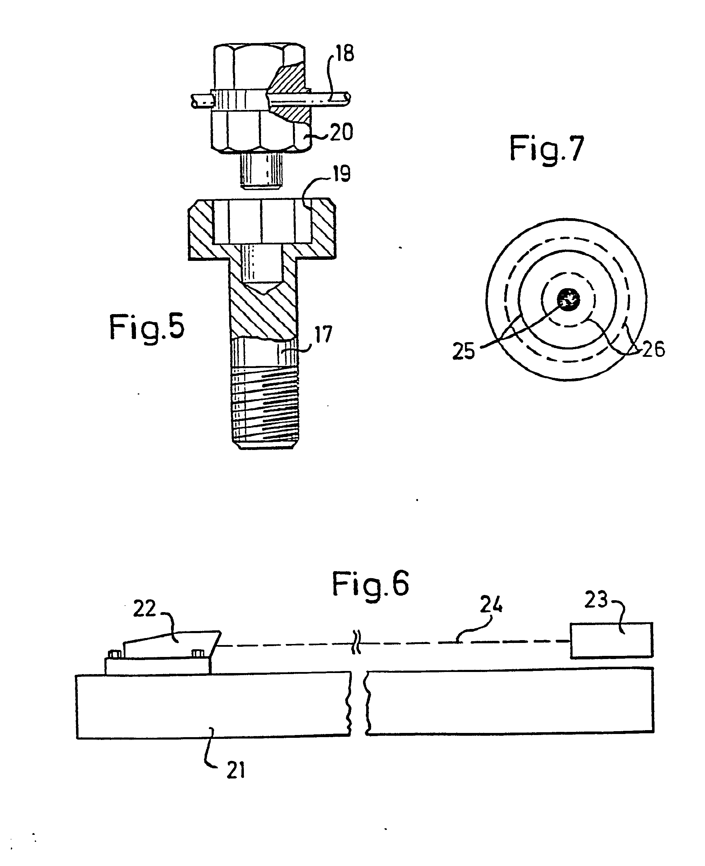

Zur Darstellung einer möglichen Schraubensicherung dient Fig. 5. Man erkennt hier daß die Schraube 17 eine vieleckige, beispielsweise achteckige Innenausnehmung 19 trägt. In diese wird ein Teil eingesetzt, welcher eine der Ausnehmung 19 entsprechende Randgestaltung 20 aufweist und der zudem mit einer Durchbohrung zur Einführung eines Drahtes 18 versehen ist. Die Gestalt der Flächen 19 und 20 ist so gewählt, daß sich praktisch immer eine Position finden läßt in welcher nach erfolgtem Anziehen der Schraube 17 der Sicherungsdraht 18 in der richtigen Position eingefädelt werden kann.

In Fig. 6 ist eine Unterlage 21 dargestellt, welche beispielsweise eine lange Maschinenführungsbahn oder auch ein Geschützrohr sein kann. Auf ein Ende dieser Führungsbahn 21 ist eine Vorrichtung 22 zur Erzeugung eines optischen Zielstrahles angebracht. Diese Vorrichtung 22 entspricht in ihrem Aufbau und ihrer Befestigung dem in den Figuren 3 und 4 gezeigten Gerät. Die Vorrichtung 22 erzeugt einen optischen Zielstrahl 24, welcher einen genau definierten Winkel zur Unterlage 21 hat. Der Zielstrahl 24 trifft auf ein Zielgerät 23, welches beispielsweise als Fernrohr ausgebildet sein kann.

Fig. 7 zeigt beispielsweise einen Einblick des Fernrohrs 23 der Fig. 6. Man erkennt zwei Kreissysteme, wobei das eine System 25 der von der Vorrichtung 22 projizierten Zielmarke und das System 26 der im Fernrohr 23 angeordneten Zielmarke entspricht. Irgendwelche Verbiegungen der Unterlage 21 machen sich durch eine gegenseitige Verschiebung der Zielmarkensysteme 25,26 bemerkbar, wobei durch den symmetrischen Aufbau dieser Systeme jede Abweichung sofort feststellbar ist.

Es ist selbstverständlich möglich auch andere Zielmarken zu verwenden. Beispielsweise kann im Fernrohr 23 eine aus Doppelstrichen bestehende Kreuzmarke vorgesehen sein, während das Gerät 22 eine Zielmarke projiziert, welche als einfaches Kreuz erscheint, das in der Justierstellung genau innerhalb des Doppelkreuzes liegt.

## Patentansprüche

1. Vorrichtung zur Erzeugung eines optischen Zielstrahles, der mit einer diese Vorrichtung tragenden Unterlage auch bei extremer mechanischer und thermischer Beanspruchung einen definierten Winkel bildet, dadurch gekennzeichnet, daß in einem form- und kraftschlüssig mit der Unterlage (14) verbundenen Metallgehäuse (8) ein einlinsiges Objektiv (1) angeordnet ist, dessen eine optisch wirksame Fläche (2) eine beleuchtete Zielmarke (4) trägt, dessen gegenüberliegende Fläche (3) zumindest in ihrem Zentralbereich (5) voll verspiegelt ist, das aus einem transparenten Material mit einem linearen Ausdehnungskoeffizienten <10-6 K-1 besteht und das über eine seine Umfangsfläche (1a) umgebende Schicht (9) aus dauerelastischem Material formschlüssig im Gehäuse (8) gelagert ist.

2. Vorrichtung nach Anspruch 1, dadurch gekennzeichnet, daß das Objektiv (1) plan-konvex ausgebildet ist, auf seiner konvexen Fläche (2) die Zielmarke (4) trägt und daß seine als Lichtaustrittsfläche dienende plane Fläche (3) in ihrem Zentralbereich (5) verspiegelt ist.

3. Vorrichtung nach Anspruch 1 und 2, dadurch gekennzeichnet, daß im Gehäuse (8) ein Prisma (7) formschlüssig gelagert ist, das den Beleuchtungsstrahlengang zur Zielmarke (4) führt.

4. Vorrichtung nach Anspruch 1, dadurch gekennzeichnet, daß das Objektiv (10) bi-konvex ausgebildet ist, auf seiner Lichtaustrittsfläche (12) die Zielmarke (13) trägt und daß die gegenüberliegende Fläche (11) voll verspiegelt ist.

5. Vorrichtung nach Anspruch 1-4, dadurch gekennzeichnet, daß die zwischen Gehäuse (8) und Objektiv (1) angeordnete Schicht (9) aus dauerelastischem Material eine Dicke < 0,3 mm hat.

6. Vorrichtung nach Anspruch 1-5, dadurch gekennzeichnet, daß die äußere Umfangsfläche (1a) des Objektivs (1,10) bi-konisch so ausgebildet ist, daß die größte Dicke im Mittelbereich des Objektivs erreicht ist.

7. Vorrichtung nach Anspruch 1, dadurch gekennzeichnet, daß das Gehäuse (8) an seiner Unterseite einen zylindrischen Zapfen (15) zum Einsetzen in eine entsprechende Ausnehmung (16) der Unterlage (14) trägt.

8. Vorrichtung nach Anspruch 7, dadurch gekennzeichnet, daß das Gehäuse (8) mit mindestens drei Schrauben (17) kraftschlüssig auf der Unterlage (17) befestigt ist.

9. Vorrichtung nach Anspruch 8, dadurch gekennzeichnet, daß die Schrauben (17) gegen Verdrehung gesichert sind.

**Claims**

1. A device for generating an optical collimating beam, which, even under extreme mechanical and heat loads forms a defined angle with a base carrying this device, characterized in that in a metal-housing (8), which is fixed in a form- and force-tight manner to said base (14) there is arranged a single-lens objective (1), one optical effective surface (2) of said objective carrying an illuminated collimating mark (4), while its opposed surface (3) is made fully reflective at least in its central region, said objective consisting of a transparent material having a linear coefficient of expansion <10-6 K-1 and being mounted in a form-tight manner within said housing (8) by a layer (9) made of permanently elastic material, which surrounds the peripheral area of the objective.

2. The device according to claim 1, characterized in that said objective (1) is a planoconvex lens carrying the collimating mark (4) on its convex surface while its plane surface serves as light-emerging-surface and carries a reflective coating on its central region (5).

3. The device according to claims 1 and 2, characterized in that a prism (7) conducting illuminating light to the collimating mark (4) is seated in a form-tight manner in the housing (8).

4. The device according to claim 1, characterized in that said objective (10) is a biconvex lens, which carries the collimating mark (13) on its light-emerging-surface, while whole its opposed surface (11) carries a reflective coating.

5. The device according to claims 1 to 4, characterized in that the layer (9) of permanently elastic material which is situated between housing (8) and objective (1) has a thickness of less than 0,3 mm.

6. The device according to claims 1 to 5, characterized in that the peripheral surface (1a) of the objective (1) has such a biconical shape that the central region of the objective defines its thickest portion.

7. The device according to claim 1, characterized in that the housing (8) carries a cylindrical lug on its lower side for inserting in a corresponding recess (16) of the base (14).

8. The device according to claim 7, characterized in that the housing (8) is attached in a force-tight manner to the base (14) by at least three bolts (17).

9. The device according to claim 9, characterized in that said bolts (17) are secured against rotation.

**Revendications**

1. Dispositif pour engendrer un rayon de visée optique, dispositif qui forme un angle défini avec une base qui le porte, également en cas de sollication mécanique et thermique extrême, caractérisé en ce qu'il comprend un objectif (1) à une lentille, disposé dans un boîtier métallique (8) relié à la base par complémentarité de formes et mécaniquement, dont une face optiquement active (2) porte un repère de visée (4) éclairé, dont la face opposée (3) est rendue entièrement réfléchissante, tout au moins dans sa zone centrale (5), la lentille étant en matériau transparent d'un coefficient de dilatation linéaire <10-6 K-1 et étant montée à complémentarité de formes dans le boîtier (8), avec interposition d'une couche (9) en matériau à élasticité durable, qui entoure la surface périphérique (1a) de la lentille.

2. Dispositif selon la revendication 1, caractérisé en ce que l'objectif (1) est plan-convexe et porte le repère de visée (4) sur sa face convexe (2), et que sa face plane (3), servant de face de sortie de la lumière, est rendue réfléchissante dans sa zone centrale (5).

3. Dispositif selon les revendications 1 et 2, caractérisé en ce qu'un prisme (7) amenant le faisceau d'éclairage au repère de visée (4) est monté à complémentarité de formes dans le boîtier (8).

4. Dispositif selon la revendication 1, caractérisé en ce que l'objectif (10) est biconvexe et porte le repère de visée (13) sur sa face de sortie de la lumière (12), et que la face opposée (11) est rendue entièrement réfléchissante.

5. Dispositif selon les revendications 1-4, caractérisé en ce que la couche (9) en matériau élastique durable, placée entre le boîtier (8) et l'objectif (1), possède une épaisseur <0,3 mm.

6. Dispositif selon les revendications 1-5, caractérisé en ce que la surface circonférentielle (1a) de l'objectif (1, 10) est biconique, de manière que l'objectif ait la plus forte épaisseur dans la région médiane.

7. Dispositif selon la revendication 1, caractérisé en ce que le boîtier (8) porte sur son côté inférieur un tenon cylindrique (15) destiné à s'emboîter dans un creux (16) correspondant de la base (14).

8. Dispositif selon la revendication 7, caractérisé en ce que le boîtier (8) est fixé mécaniquement sur la base (14) par au moins trois vis (17).

9. Dispositif selon la revendication 8, caractérisé en ce que les vis (17) sont bloquées en rotation.

# Fig.1

# Fig.2

# Fig. 3

# Fig. 4

Fig.5

18

20

19

17

Fig.7

25    26

Fig.6

22    24    23

21